# FASCICULE DE BREVET EUROPEEN

(11) **EP 0 882 944 B1**
(45) Date de publication et mention de la délivrance du brevet: **27.08.2003**
(21) Numéro de dépôt: 98401330.0
(22) Date de dépôt: 04.06.1998
(51) Int. Cl.: G01B 7/34, G01N 27/00

(54) **Procédé de fabrication d'un organe palpeur pour capteur micromécanique, notamment pour microscope à force atomique**
Verfahren zur Herstellung einer micromechanischen Messsonde, insbesondere eines Rasterkraftmikroskops
Method of manufacturing a micromechanical sensing probe, in particular for an atomic force microscope

(30) Priorité: 05.06.1997 FR 9706986
(43) Date de publication de la demande: 09.12.1998
(73) Titulaire: CSEM Centre Suisse d'Electronique et de Microtechnique S.A. Recherche et Développement, 2007 Neuchâtel (CH)
(72) Inventeur: Niedermann, Philipp, 2000 Neuchatel (CH); Beuret, Cynthia, 2000 Neuchâtel (CH); Jeanneret, Sylvain, 2300 La Chaux-de-Fonds (CH)
(74) Mandataire: Caron, Gérard

(56) Documents cités:
- EP-A- 0 766 060
- WO-A-92/21135
- WO-A-95/34000
- DE-A- 4 126 151
- US-A- 4 968 585
- US-A- 5 164 595
- US-A- 5 221 415
- US-A- 5 367 165
- ALBRECHT T R ET AL: "MICROFABRICATION OF CANTILEVER STYLI FOR THE ATOMIC FORCE MICROSCOPE" JOURNAL OF VACUUM SCIENCE AND TECHNOLOGY: PART A, vol. 8, no. 4, 1 juillet 1990, pages 3386-3396, XP000148046

## Description

La présente invention est relative à un procédé de fabrication d'un organe palpeur utilisé dans un capteur micromécanique notamment pour microscope à force atomique ou analogue, cet organe pouvant présenter une ou plusieurs pointes de palpage. L'invention concerne également un organe palpeur fabriqué par ce procédé.

Des capteurs de ce type pour microscope à force atomique (AFM) sont utilisés notamment dans les techniques de profilométrie, la ou les pointes étant réalisées avec une précision largement inférieure au micron et pouvant être déplacées suivant des distances submicrométriques dans trois directions orthogonales, permettant d'explorer la surface d'un échantillon pour en relever la topographie dans le domaine des dimensions atomiques.

Actuellement, plusieurs procédés sont employés pour fabriquer des organes palpeurs du type indiqué ci-dessus. Par exemple, on peut creuser par micro-usinage, par exemple par gravure au KOH, un trou de forme pyramidale dans un substrat en silicium, utilisé comme moule et remplir le trou ainsi obtenu de nitrure de silicium ou de diamant, après quoi, on enlève le silicium pour ne laisser qu'une pointe servant à explorer la surface d'un échantillon. Un tel procédé permet de fabriquer des organes palpeurs comportant plusieurs pointes à la fois disposées côte-à-côte, par exemple.

Un autre procédé consiste à former des pointes en silicium sur une surface sur laquelle on a "sous-attaqué" le silicium de façon isotrope ou anisotrope. Un tel procédé est décrit par exemple dans US 5 367 165.

Par ailleurs, WO 95/34 000 décrit un-organe palpeur dans lequel la pointe de palpage est formée dans une couche de silicium sur laquelle on vient déposer une couche de revêtement conducteur.

On peut également fabriquer des organes palpeurs ayant des pointes en carbone réalisées en déposant du carbone par faisceau électronique, ou des pointes obtenues par gravure à l'aide d'un faisceau d'ions focalisés. On peut encore utiliser d'autres techniques impliquant du verre photostructuré ou un moulage de nitrure de silicium dans des trous obtenus par RIE (Reactive Ion Etching ou gravure par ions réactifs).

Parmi toutes ces techniques, celles permettant d'obtenir des pointes en diamant ont généralement la préférence en raison du module de Young très élevé de ce matériau (1000 GPa comparé au module du silicium qui n'est que de 170 GPa) rendant la pointe très rigide, et en raison de la dureté très élevée du diamant, très résistante à l'usure.

La fabrication des pointes en diamant passe par la technique du moulage mettant en oeuvre par exemple le procédé de fabrication décrit dans le brevet EP O 766 060 dans lequel on prévoit de faire croître le diamant sur une couche de nucléation en diamant déposée au préalable dans un trou formé dans un substrat en silicium.

Une méthode préférée pour ménager de tels trous dans le substrat consiste à procéder à une attaque anisotrope [111] au KOH, par exemple et elle conduit à des trous pyramidaux, en principe à base carrée avec un angle, d'une valeur d'environ 70° entre les projections de l'axe de la pyramide sur deux de ses faces opposées.

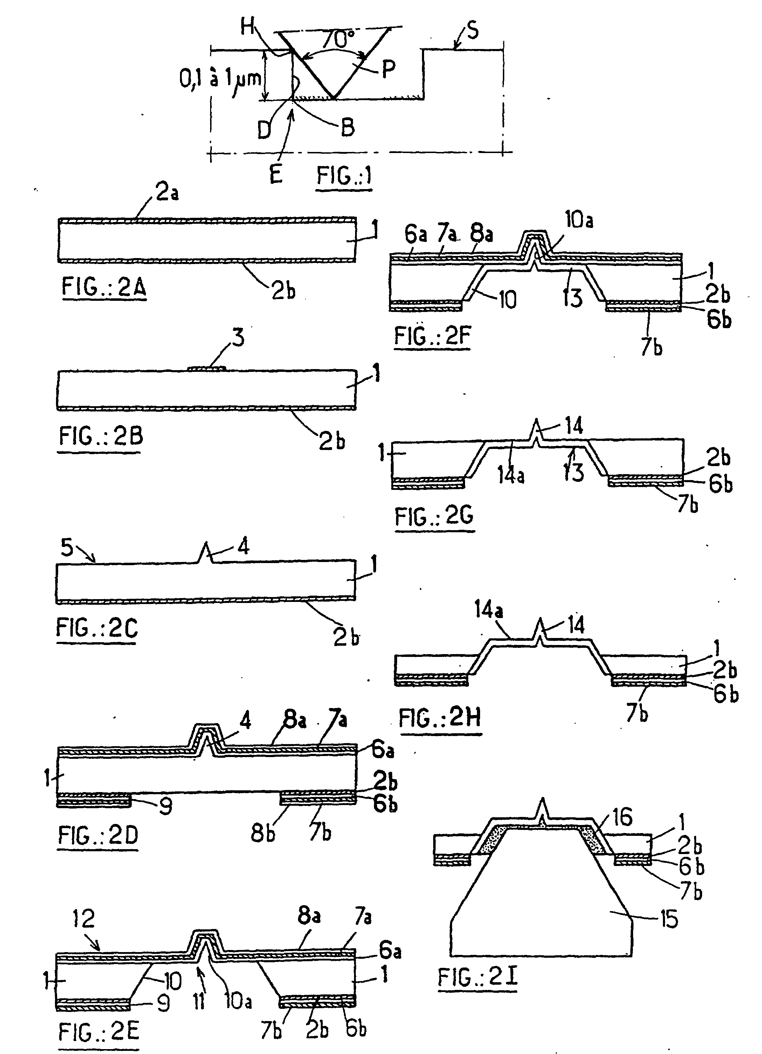

Or, les capteurs de la technique antérieure citée ont des valeurs d'angle au sommet importantes, ce dont il résulte qu'elles ont une résolution relativement faible, des discontinuités assez brusques de la surface à explorer ne pouvant être mesurées avec la précision voulue. C'est ce qu'illustre la figure 1 des dessins annexés montrant que si, par exemple, la discontinuité est un échelon E (qui pour fixer les idées peut avoir une profondeur de 0,1 à 1 µm), la pointe de palpage P ne pourra se rapprocher de la base B de la paroi D qui se dresse par rapport à la perpendiculaire de la surface S à explorer. En effet, le haut H de la paroi D viendra en contact avec l'une des faces obliques de la pyramide de la pointe éloignant de la paroi D le sommet de celle-ci et ce d'autant plus que la valeur d'angle définie ci-dessus est plus grande.

Il convient d'observer que des pointes nettement plus fines de forme à peu près conique et ayant un demi-angle au sommet pouvant se situer entre 10° et 20° ou moins, ont déjà pu être obtenues, ces pointes ayant en outre, à leur extrémité libre, un très faible rayon de courbure, typiquement entre 5 et 20 nm.

On peut trouver une description d'un procédé de fabrication d'une telle pointe dans un article de T. Albrecht et al., intitulé "Microfabrication of cantilever styli for atomic force microscope" (Microfabrication de palpeur en pointe pour microscope à force atomique) et paru dans le Journal of Vacuum Science and Technology, Volume 8, page 3386, 1990.

Ce procédé consiste à déposer sur un substrat (voir figure 10 de l'article) une première couche en Cu surmontée d'une couche en Ti-W. Un trou est pratiqué dans la couche supérieure qui est ensuite sous-attaquée pour former une cavité dans le Cu. Ensuite, un matériau est évaporé à partir d'une source ponctuelle dans la cavité ainsi formée, ce dont il résulte la formation d'une pointe. Le matériau évaporé pour la formation de la pointe est le Nb, Al, Ir, Ta et SiO2.

De cette manière, il est possible de former des pointes coniques ayant un rapport hauteur/diamètre de la base situé entre 1:1 et 1:2,5.

Cependant, dans ce cas également, ces pointes ne sont pas satisfaisantes en raison de leur faible dureté et de leur usure prématurée.

L'invention a pour but de fournir un procédé de fabrication d'un organe palpeur pour capteur micromécanique ayant au moins une pointe de forme au moins approximativement conique et présentant un faible demi-angle au sommet, ce capteur présentant en outre une très bonne résistance à l'usure vis-à-vis des matériaux dont peuvent être faits les échantillons à analyser.

Elle a donc pour objet un procédé de fabrication tel que défini dans la revendication 1.

Il résulte de ces caractéristiques que le matériau de la pointe de palpage peut être choisi de telle manière que sa dureté soit adaptée au matériau de l'échantillon à analyser et qu'elle résiste donc convenablement à l'usure. Cependant, la points de palpage obtenue présente également un angle au sommet sensiblement égal à celui du précurseur de pointe. Or, comme celui-ci est réalisé par sous-attaque du silicium, il a un demi-angle au sommet faible de l'ordre de 10° à 20° ou moins. Par conséquent, la résolution d'un capteur équipé d'un tel organe palpeur est meilleure que celle des capteurs de la technique antérieure, propriété à laquelle s'ajoute celle d'une durée de vie prolongée. On observera également que le rayon de courbure de l'extrémité libre d'une telle pointe est très faible, typiquement de l'ordre de 5 à 20 nm.

Des particularités avantageuses du procédé selon l'invention sont définies dans les sous-revendications 2 à 14.

D'autres caractéristiques et avantages de l'invention apparaîtront au cours de la description qui va suivre, donnée uniquement à titre d'exemple et faite en se référant aux dessins annexés sur lesquels :
- la figure 1, déjà décrite, est une vue schématique partielle d'une pièce formant échantillon dont la surface doit être explorée par un capteur comportant un organe palpeur en forme de pointe, la surface présentant une discontinuité brusque;
- les figures 2A à 2I sont des vues partielles en coupe d'un substrat sur lequel sont effectuées diverses opérations de fabrication illustrant des étapes successives d'un procédé selon un premier mode de mise en oeuvre de l'invention;
- les figures 3A à 3E sont des vues analogues à celles des figures 2A à 2I, et illustrant différentes étapes successives d'un procédé selon un autre mode de mise en oeuvre de l'invention.

On va tout d'abord se référer aux figures 2A à 2I pour décrire un premier mode de mise en oeuvre de l'invention

Comme le montre la figure 2A, on utilise au départ une plaquette en silicium 1, d'une épaisseur de quelques centaines de micromètres, sur laquelle un grand nombre de pointes selon l'invention peut être réalisé simultanément, la figure n'illustrant la fabrication que d'une seule de ces pointes.

Cette plaquette 1 est recouverte sur ces deux faces d'une couche d'oxyde, respectivement 2a et 2b, la couche 2a étant ensuite structurée, par l'intermédiaire du dépôt d'un photoresist et d'une attaque appropriée, pour former une zone de masquage en oxyde 3 (figure 2B).

Le substrat 1 est ensuite soumis à une attaque permettant d'éliminer du silicium sur la face sur laquelle se trouve le masque d'oxyde 3, l'opération ayant pour effet que le silicium se trouve éliminé non seulement là où il n'est pas recouvert par l'oxyde, mais également sous celui-ci, la partie restante de la plaquette étant alors profilée d'une manière particulière. C'est pourquoi l'opération est appelée aussi "sous-attaque".

Cette sous-attaque peut être exécutée de deux façons différentes. Une première est de nature isotrope et consiste à utiliser un plasma, la méthode RIE par SF₆ par exemple, ou encore un mélange de HF, HNO₃ et H₂O. La seconde, actuellement préférée, est de type anisotrope et elle est exécutée avec du KOH.

Dans les deux cas, la sous-attaque peut être mise en oeuvre en plusieurs phases dont chacune permet d'enlever une couche de silicium d'une épaisseur donnée. La totalité de l'épaisseur des couches correspond à la longueur de la pointe que l'on va obtenir en définitive.

Le résultat de la sous-attaque apparaît sur la figure 2C sur laquelle on observe que le substrat 1 présente maintenant, sur l'une de ses faces, un précurseur de pointe 4 en silicium, l'autre face n'ayant pas été entamée puisque restant couverte par la couche d'oxyde 2b. La pointe en silicium 4 a une forme pyramidale à base à peu près octogonale avec des angles latéraux arrondis de sorte que l'on peut assimiler sa forme à celle d'un cône. On notera qu'elle présente un demi-angle au sommet faible situé environ entre 10° et 20° ou moins, par exemple. On peut considérer que la plaquette revêt maintenant la forme d'un "moule positif" désigné globalement par la référence 5.

Ce moule positif 5 ainsi obtenu est alors soumis à plusieurs opérations de recouvrement. Tout d'abord, le moule positif 5 reçoit sur ces deux faces une couche 6a, 6b de nitrure de silicium Si₃N₄ d'une épaisseur de 1000 à 10 000 angströms, de préférence de 2000 angströms, l'opération pouvant être réalisée par dépôt chimique à la vapeur (CVD). Les couches 6a et 6b sont ensuite recouvertes de couches d'oxyde 7a, 7b d'une épaisseur pouvant aller de 2000 à 10 000 angströms, et ayant de préférence une épaisseur de 5000 angströms. Ces couches 7a et 7b peuvent également être obtenues par dépôt chimique à la vapeur.

Cette étape du procédé peut être suivie d'un nouveau dépôt d'au moins une couche de nitrure de silicium Si₃N₄, 8a et 8b respectivement, sur chacune des deux couches d'oxyde 7a et 7b, les épaisseurs étant par exemple les mêmes que celles des couches 6a et 6b.

L'ensemble ainsi obtenu est recouvert sur ses deux faces de couches de photoresist de protection (non visibles sur les figures), la couche se trouvant à la face opposée à celle de la pointe 4 étant exposée à travers un masque et développée, ce qui laisse à découvert dans la couche 8b une région de forme sensiblement carrée dont le centre se trouve au droit de la pointe 4.

On procède ensuite à une attaque par RIE des couches 6b, 7b et 8b dans ladite zone pour mettre à nu le silicium du substrat, ce qui crée une ouverture 9 (Fig 2D).

Puis, comme représenté sur la figure 2E, le silicium en dessous de l'ouverture 9 est éliminé en procédant en deux phases d'attaque anisotrope au KOH, la première phase enlevant la plus grande partie du silicium sans encore atteindre la couche de nitrure 6a. Puis, on enlève la couche de nitrure 8b, par exemple par RIE et on termine l'attaque au KOH par la deuxième phase, jusqu'à atteindre la couche 6a, du côté du substrat où se trouve la pointe 4.

Ces opérations d'attaque successives ont pour effet de créer une cavité 10 dont le fond va être formé par une membrane 11 composée des couches superposées de nitrure et d'oxyde 6a, 7a et 8a. On peut observer à ce stade que cette membrane 11 sera d'autant plus solide que le nombre de ses couches superposées sera élevé, la solidité étant surtout un avantage si la plaquette 1 doit subir des manipulations et des transferts.

Les attaques ainsi exécutées de manière anisotrope à l'aide de KOH, il n'est pas possible d'enlever complètement et de manière satisfaisante, le silicium de la pointe 4 elle-même. On préfère ainsi exécuter les opérations d'attaque au KOH jusqu'à atteindre à peine la couche de barrière 6a, après quoi on exécute une attaque supplémentaire isotrope permettant d'enlever cette matière de la pointe 4. Cette attaque isotrope est réalisée de préférence au moyen d'un mélange humide composé de HF, HNO₃ et H₂O.

L'ensemble représenté sur la figure 2E présente ainsi une cavité 10 prolongé par un trou pointu 10a ayant en négatif la forme de la pointe 4, avec un demi-angle au sommet faible situé environ entre 10° et 20° ou moins, par exemple. On appellera cet ensemble par la suite "moule négatif" désigné globalement par la référence 12.

Ce moule négatif 12 va alors servir pour "mouler" la pointe en matériau dur que l'on souhaite obtenir (figure 2F). Le matériau dur utilisé peut être du nitrure de bore, du carbure de silicium, ou encore un métal tel que l'or et le platine. Cependant, pour des raisons déjà évoquées ci-dessus, le matériau préféré pour la pointe est le diamant. On notera que dans le présent contexte, le terme "dur" doit être considéré comme un qualificatif relatif, définissant une dureté élevée par rapport à celle, plus faible, de la surface à explorer par l'organe palpeur comportant la pointe.

Ceci étant, si le matériau dur est du diamant, on procède de préférence au dépôt d'une couche de nucléation (non référencée sur la figure) de la façon décrite dans le brevet européen précitée. Cette couche de nucléation ne se dépose pas sur la couche d'oxyde 7b, car le diamant ne peut structurellement y adhérer.

Sur la couche de nucléation, on dépose ensuite du diamant, de préférence par dépôt chimique à la vapeur, jusqu'à obtention d'une couche de diamant 13 d'une épaisseur de 100 nm à 5 µm, une épaisseur préférée étant 1µm. Le diamant peut être déposé à l'état pur ou il peut être dopé, par exemple au bore pour lui donner une conductibilité prédéterminée utile, le cas échéant, pour permettre ultérieurement des mesures à l'aide d'un courant électrique s'écoulant dans la pointe. Le dopage peut être réalisé en utilisant un mélange gazeux de H₂, CH₄ et du bore. La couche de diamant 13 ainsi obtenue s'étale sur toute la paroi de la cavité 10 et du trou 10a.

Les autres matériaux proposés pour la réalisation de la pointe peuvent être déposés par des processus de dépôt classiques.

L'étape suivante du procédé de fabrication (figure 2G) consiste à enlever les couches de nitrure et d'oxyde 6a, 7a et 8a prévues à la face du substrat opposée à la cavité 10, par exemple par RIE, ce qui découvre une pointe en matériau dur 14 supportée par une membrane 14a en le même matériau, elle-même attachée aux parois latérales de la cavité 10. Il est évident que le matériau dur doit résister à cette attaque; c'est pourquoi, s'il est en métal, on préfère utiliser l'or ou le platine auquel cas l'attaque peut être réalisée à l'aide d'acide phosphorique chaud.

Facultativement, on peut alors procéder à un dégagement plus poussé de la pointe 14 et de la membrane 14a (figure 2H), en procédant à une attaque, au KOH par exemple, du silicium de la face du substrat du côté de la pointe 14. Ce dégagement de la pointe 14 permet, le cas échéant, un positionnement plus commode de l'organe palpeur lors des mesures ultérieures.

La figure 2I représente schématiquement un organe palpeur selon l'invention obtenu par le procédé que l'on vient de décrire. On voit que l'ensemble représenté sur. la figure 1H est monté sur un support profilé 15 à l'aide d'une couche de colle 16, la forme du support 15 étant adaptée à la forme de la paroi de la cavité 10.

Le procédé selon l'invention étant exécuté sur une plaquette de silicium, on peut envisager de fabriquer simultanément plusieurs milliers d'organes palpeurs à la fois, la plaquette étant sciée convenablement avant que les organes palpeurs individuels ne soient montés sur leur support 15.

Grâce au procédé selon l'invention, qui fait intervenir successivement la fabrication d'un moule positif 5, puis d'un moule négatif 12 à partir de ce moule positif, la pointe 14 présente un demi-angle au sommet égal à celui que présente une pointe en silicium obtenue, de façon classique, par sous-attaque donnant lieu à un angle au sommet pouvant être largement inférieur à 20°. La résolution des mesures obtenues avec un organe palpeur ainsi fabriqué peut être nettement meilleure que par le passé, l'organe palpeur pouvant en même temps être très résistant à l'usure. On remarquera que l'organe palpeur peut être utilisé en lui appliquant une force qui peut être inférieure à 1 mN.

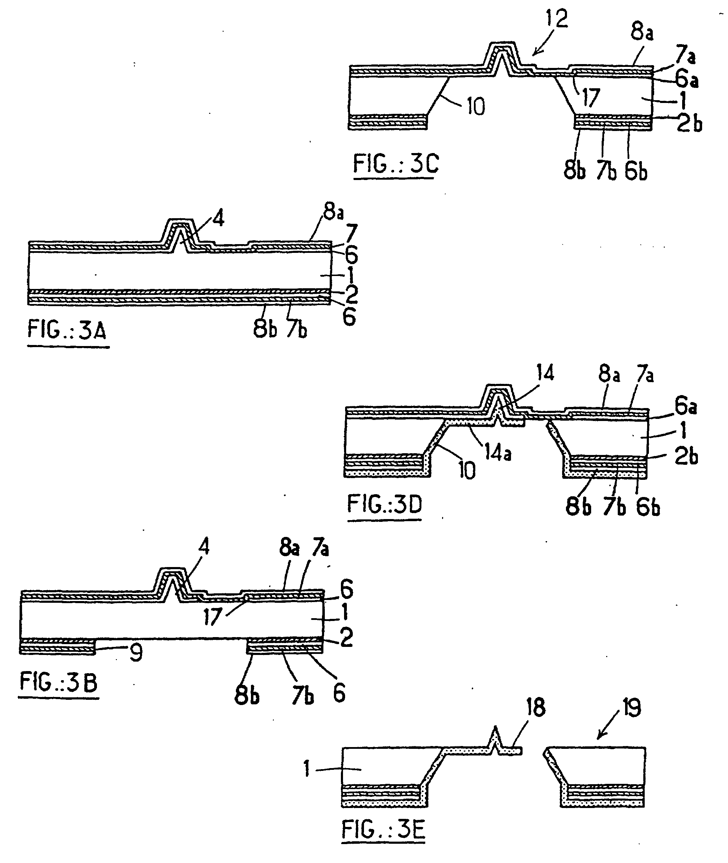

Les figures 3A à 3E représentent une variante d'exécution du procédé selon l'invention permettant d'obtenir des organes palpeurs en porte-à-faux par rapport au substrat 1. Cette disposition peut être avantageuse pour certaines mesures comme il est expliqué dans le brevet européen sus-indiqué. Ce mode d'exécution diffère de celui décrit ci-dessus en ce qu'après dépôt de la première couche de nitrure 6a, on procède à une attaque sélective de cette couche par exemple par RIE et à l'aide d'un photorésist habituel, pour former une ouverture 17, puis le procédé est exécuté de la même façon que précédemment, à cette exception près que l'on laisse, du moins dans le cas représenté, la couche de nitrure 8b du côté de la cavité 10, comme représenté à partir de la figure 3B.

Après formation de la cavité 10 (figure 3C), l'ouverture 17 pratiquée dans la couche de nitrure 6b auparavant, fait qu'une partie de la couche d'oxyde 7a est mise à nu dans cette cavité de sorte qu'au cours de l'étape consécutive de dépôt d'une couche de matériau dur, celui-ci va manquer à cet endroit. En revanche, dans le mode de mise en oeuvre illustré ici, la couche de matériau dur peut se déposer sur la couche 8b conservée auparavant de sorte que la formation du matériau dur s'étend aussi sur la face de l'ensemble, opposée à la pointe 14 dégagée lors de l'opération d'enlèvement des couches 6a, 7a et 8a. Cette dernière opération a donc pour effet d'interrompre la couche de matériau dur formée dans la cavité 10. On obtient ainsi un organe de palpage comportant un levier 18 en matériau dur, une partie 19 de l'ensemble étant devenue inutile.

Diverses autres variantes peuvent être envisagées au cours de la mise en oeuvre du procédé selon l'invention.

C'est ainsi que le nitrure de silicium peut être remplacé par du carbure de silicium pour l'obtention des couches 6a, 6b et 8a, 8b.

## Revendications

1. Procédé de fabrication d'un organe palpeur utilisé dans un capteur micromécanique notamment pour microscope à force atomique ou analogue destiné à relever la topographie de surfaces d'échantillons, cet organe présentant une ou plusieurs pointes de palpage (14), ledit procédé consistant
- à créer par des opérations photolithographiques sélectives sur un substrat (1) revêtu d'au moins une couche de barrière (6a), un moule négatif (12) dont la paroi présente au moins une empreinte de la pointe de palpage (14) à obtenir,
- à revêtir au moins une partie de la paroi dudit moule négatif (12), y compris ladite empreinte, d'une couche de matériau (14, 14a) de formation de pointe dont la dureté est supérieure à celle du matériau dont est fait l'échantillon à examiner, et
- à enlever ladite couche de barrière (6a),
- ce procédé étant **caractérisé en ce qu'**il consiste en outre:
- à former sur une première des faces dudit substrat (1) un précurseur de pointe (4) par une sous-attaque du silicium dudit substrat (1) de manière à former un moule positif (5);
- lesdites opérations de photolithographie sélective consistant à attaquer sélectivement ledit substrat (1) par sa seconde face opposée à ladite première face, de manière à éliminer, dans la région dans laquelle se trouve ledit précurseur de pointe (4), le silicium dudit substrat (1) jusqu'à ladite couche de barrière (6a), y compris le silicium constituant ledit précurseur de pointe (4), pour former ledit moule négatif (12).

2. Procédé selon la revendication 1, **caractérisé en ce que** ledit matériau de formation de point est choisi dans le groupe comprenant le diamant, le nitrure de bore, le carbure de silicium et un métal tel que l'or ou le platine.

3. Procédé suivant l'une quelconque des revendications 1 et 2, **caractérisé en ce que** ladite couche de barrière (6a) est réalisée en un matériau choisi parmi le nitrure de silicium et le carbure de silicium.

4. Procédé selon l'une quelconque des revendications 1 à 3, **caractérisé en ce qu'**il consiste, en outre, préalablement auxdites opérations de photolithographie, à revêtir ladite couche de barrière (6a) d'au moins une première superposition de couches supplémentaires comprenant une couche d'oxyde (7a) et une couche (8a) faite dans le même matériau que ladite couche de barrière (6a).

5. Procédé selon l'une quelconque des revendications 1 et 2, **caractérisé en ce que** lesdites opérations de photolithographie sélective comprennent le dépôt sur ladite seconde face d'une couche de couverture (6b) simultanément au dépôt de ladite couche de barrière (6a) et faite dans le même matériau que celui-ci et à ouvrir sélectivement ladite couche de couverture dans la région correspondant audit précurseur de pointe (4) pour qu'elle puisse servir de masque pendant l'élimination dudit silicium jusqu'à ladite couche de barrière (6a).

6. Procédé selon les revendications 4 et 5, **caractérisé en ce qu'**il consiste à revêtir ladite couche de couverture (6b) d'au moins une seconde superposition de couches supplémentaires (7b, 8b), simultanément au revêtement par une première superposition de couches supplémentaires (7a, 8a) de ladite couche de barrière (6a), et faites respectivement dans les mêmes matériaux que ces dernières couches supplémentaires (7a, 8a).

7. Procédé selon l'une quelconque des revendications 1 à 6, **caractérisé en ce qu'**il consiste également à ouvrir une ouverture (17) dans ladite couche de barrière (6a) préalablement auxdites opérations de photolithographie sélective de manière à créer une pointe de palpage (14) située en porte-à-faux.

8. Procédé selon l'une quelconque des revendications 1 à 7, **caractérisé en ce que** lesdites opérations de photolithographie sélective consistent à éliminer le silicium dudit substrat par une attaque anisotrope jusqu'à atteindre sensiblement ladite couche de barrière (6a), puis à éliminer ledit précurseur de pointe (4) par une attaque isotrope.

9. Procédé selon la revendication 8, **caractérisé en ce que** ladite attaque anisotrope est faite au KOH et ladite attaque isotrope est faite à l'aide d'un mélange humide contenant HF, HNO₃ et H₂O.

10. Procédé selon l'une quelconque des revendications 1 à 9, **caractérisé en ce que** ladite couche de barrière présente une épaisseur comprise entre 1000 et 10 000 Angströms, de préférence de 2000 Angströms.

11. Procédé selon l'une quelconque des revendications 4 à 10, **caractérisé en ce que** ladite première superposition de couches supplémentaires (7a, 8a) comprend une couche d'oxyde d'une épaisseur entre 1000 et 10 000 Angströms, de préférence de 5000 Angströms, et **en ce que** ladite autre couche supplémentaire (8a) présente une épaisseur comprise entre 1000 et 10 000 Angströms, de préférence de 2000 Angströms.

12. Procédé selon l'une quelconque des revendications 2 à 11, **caractérisé en ce que** ledit matériau de formation de pointe est le diamant et **en ce que**, préalablement au dépôt de la couche de diamant (14, 14a), on procède à la formation d'une couche de nucléation de diamant dans la cavité dudit moule négatif (12).

13. Procédé selon l'une quelconque des revendications 1 à 12, **caractérisé en ce que** ladite couche de matériau de formation de pointe (14, 15a) est formée jusqu'à une épaisseur située entre 100 nm et 5 µm, et de préférence jusqu'à une épaisseur de 1 µm.

14. Procédé selon l'une quelconque des revendications 2 à 13, **caractérisé en ce que** ledit matériau de formation de pointe est le diamant et **en ce qu'**il consiste en outre à doper ladite couche de diamant (14, 14a) pour la rendre conductrice.

## Patentansprüche

1. Verfahren zum Herstellen eines Tastfühlers, der in einem mikromechanischen Aufnehmer, insbesondere für ein Rasterkraftmikroskop oder dergleichen verwendet wird, das zum Erfassen der Topographie von Probenoberflächen dient, wobei der Tastfühler eine oder mehrere Tastspitzen (14) aufweist, welches Verfahren darin besteht,
- durch Selektivphotolithographie-Bearbeitungsvorgänge auf einem mit mindestens einer Sperrschicht (6a) versehenen Substrat (1) eine Negativform (12) zu erzeugen, deren Wand mindestens einen Abdruck der zu erzeugenden Tastspitze (14) aufweist,
- mindestens einen Teil der Wand der Negativform (12) einschließlich des Abdruckes mit einer Schicht (14, 14a) aus einem Material zum Bilden der Tastspitze zu beschichten, dessen Härte größer als die des Materials ist, aus dem die zu untersuchende Probe besteht, und
- die Sperrschicht (6a) zu entfernen,
- wobei dieses Verfahren **dadurch gekennzeichnet ist, dass** es ferner darin besteht:
- auf einer ersten Seite des Substrates (1) eine Vorläufer-Tastspitze (4) durch Unterschicht-Ätzen des Siliziums des Substrates (1) zum Herstellen einer Positivform (5) zu bilden;
- wobei die Selektivphotolithographie-Bearbeitungsyorgänge darin bestehen, das Substrat (1) auf seiner der ersten Seite gegenüberliegenden zweiten Seite selektiv so zu ätzen, dass in dem Bereich, in dem sich die Vorläufer-Tastspitze (4) befindet, das Silizium des Substrates (1) bis zu der Sperrschicht (6a) einschließlich des die Vorläufer-Tastspitze (4) bildenden Siliziums entfernt wird, um die Negativform (12) zu bilden.

2. Verfahren nach Anspruch 1, **dadurch gekennzeichnet, dass** das Material zum Bilden der Tastspitze ausgewählt wird aus der Gruppe, die Diamant, Bornitrid, Siliziumkarbid und ein Metall wie Gold oder Platin umfasst.

3. Verfahren nach einem der Ansprüche 1 und 2, **dadurch gekennzeichnet, dass** die Sperrschicht (6a) aus einem Material hergestellt wird, das aus Siliziumnitrid und Siliziumkarbid ausgewählt wird.

4. Verfahren nach einem der Ansprüche 1 bis 3, **dadurch gekennzeichnet, dass** es ferner darin besteht, vor den Lithographie-Bearbeitungsvorgängen die Sperrschicht (6a) mit mindestens einer ersten Überlagerung zusätzlicher Schichten zu beschichten, die eine Oxidschicht (7a) und eine Schicht (8a) umfassen, welche aus demselben Material wie die Sperrschicht (6a) besteht.

5. Verfahren nach einem der Ansprüche 1 und 2, **dadurch gekennzeichnet, dass** die Selektivphotolithographie-Bearbeitungsvorgänge die Ablagerung einer Deckschicht (6b) auf der zweiten Seite gleichzeitig mit der Ablagerung der Sperrschicht (6ab) und bestehend aus dem gleichen Material wie diese umfassen und die Deckschicht in dem Bereich entsprechend der Vorläufer-Tastspitze (4) selektiv geöffnet wird, damit sie während der Entfernung des Siliziums bis zur Sperrschicht (6a) als Maske dienen kann.

6. Verfahren nach den Ansprüchen 4 und 5, **dadurch gekennzeichnet, dass** es darin besteht, die Deckschicht (6b) mit mindestens einer zweiten Überlagerung zusätzlicher Schichten (7b, 8b) gleichzeitig mit der Beschichtung durch eine erste Überlagerung zusätzlicher Schichten (7a, 8a) der Sperrschicht (6a) zu beschichten, wobei die erstgenannten zusätzlichen Schichten aus den gleichen Materialien wie die zuletzt genannten zusätzlichen Schichten (7a, 8a) bestehen.

7. Verfahren nach einem der Ansprüche 1 bis 6, **dadurch gekennzeichnet, dass** es ferner darin besteht, eine Öffnung (17) in der Sperrschicht (6a) vor den Selektivphotolithographie-Bearbeitungsvorgängen so zu bilden, dass eine Tastspitze (14) erzeugt wird, die auskragend angeordnet ist.

8. Verfahren nach einem der Ansprüche 1 bis 7, **dadurch gekennzeichnet, dass** die Selektivphotolithographie-Bearbeitungsvorgänge darin bestehen, das Silizium des Substrates durch einen anisotropen Ätzvorgang zu entfernen, bis im wesentlichen die Sperrschicht (6a) erreicht wird, worauf die Vorläufer-Tastspitze (4) durch einen isotropen Ätzvorgang entfernt wird.

9. Verfahren nach Anspruch 8, **dadurch gekennzeichnet, dass** der anisotrope Ätzvorgang mittels KOH durchgeführt wird und dass der isotrope Ätzvorgang mit Hilfe eines Nassgemisches durchgeführt wird, das HF, HNO₃ und H₂O enthält.

10. Verfahren nach einem der Ansprüche 1 bis 9, **dadurch gekennzeichnet, dass** die Sperrschicht eine Dicke zwischen 1000 und 10000 Angström, vorzugsweise 2000 Angström hat.

11. Verfahren nach einem der Ansprüche 4 bis 10, **dadurch gekennzeichnet, dass** die erste Überlagerung zusätzlicher Schichten (7a, 8a) eine Oxidschicht einer Dicke zwischen 1000 und 10000 Angström, vorzugsweise 5000 Angström, aufweist und dass die andere zusätzliche Schicht (8a) eine Dicke zwischen 1000 und 10000 Angström, vorzugsweise 2000 Angström, hat.

12. Verfahren nach einem der Ansprüche 2 bis 11, **dadurch gekennzeichnet, dass** das Material zum Bilden der Tastspitze Diamant ist und dass vor der Ablagerung der Diamantschicht (14, 14a) mit der Bildung einer Diamant-Nukleationsschicht in dem Hohlraum der Negativform (12) fortgeschritten wird.

13. Verfahren nach einem der Ansprüche 1 bis 12, **dadurch gekennzeichnet, dass** die Schicht aus dem Material zum Bilden der Tastspitze (14, 15a) bis zu einer Dicke zwischen 100 nm und 5µm und vorzugsweise bis zu einer Dicke von 1µm gebildet wird.

14. Verfahren nach einem der Ansprüche 2 bis 13, **dadurch gekennzeichnet, dass** das Material zum Bilden der Tastspitze Diamant ist und dass es ferner darin besteht, die Diamantschicht (14, 14a) zu dotieren, um sie leitfähig zu machen.

## Claims

1. A process for fabricating a feeler member used in a micromechanical probe, in particular for an atomic force microscope or the like, for taking the topography of sample surfaces, said member having one or more feeler tips (14), said process including:
- creating by selective photolithographic operations on a substrate (1) coated with at least one barrier layer (6a) a negative mold (12) the wall of which has at least one imprint of the feeler tip (14) to be obtained,
- coating at least a part of said wall of said negative mold (12), including said imprint, with a layer of material (14, 14a) able to form a tip and the hardness of which is higher than that of the material of which is made the sample to be investigated,
- removing said barrier layer (6a),
- said process being **characterized in that** it further includes:
- forming a tip precursor (4) on a first face of said substrate (1) by etch-undercutting the silicon of said substrate (1) to form a positive mold (5),
- said photolithographic operations consisting in selectively etching a second face of said substrate (1) opposite said first face so as to eliminate the silicon of said substrate (1) as far as said barrier layer (6a) in the region containing said tip precursor (4), including the silicon constituting said tip precursor (4), to form said negative mold (12).

2. The process according to claim 1, **characterized in that** said material able to form the tip is chosen from the group comprising diamond, boron nitride, silicon carbide and a metal such as gold or platinum.

3. The process according to any one of claims 1 and 2, **characterized in that** said barrier layer (6a) is a layer of a material chosen from silicon nitride and silicon carbide.

4. A process according to any one of claims 1-3, **characterized in that** it further includes, prior to said photolithographic operations, coating said barrier layer (6a) with at least a first stack of additional layers comprising an oxide layer (7a) and a layer (8a) of the same material as said barrier layer (6a).

5. The process according to any one of claims 1 and 2, **characterized in that** said selective photolithographic operations comprise depositing on said second face simultaneously with depositing said barrier layer (6a) a cover layer (6b) of the same material as the latter and selectively opening said cover layer in the region corresponding to said tip precursor (4) so that it can serve as a mask during elimination of said silicon as far as said barrier layer (6a).

6. The process according to claims 4 and 5, **characterized in that** simultaneously with coating said barrier layer (6a) with a first stack of additional layers (7a, 8a) said cover layer (6b) is coated with at least a second stack of additional layers (7b, 8b) of the same materials as respective additional layers (7a, 8a).

7. A process according to any one of claims 1-6, **characterized in that** it further includes forming an opening (17) in said barrier layer (6a) before said selective photolithographic operations to create a cantilever feeler tip (14).

8. The process according to any one of claims 1-7, **characterized in that** said selective photolithographic operations consist in eliminating the silicon of said substrate by anisotropic etching substantially as far as said barrier layer (6a) followed by elimination of said tip precursor (4) by isotropic etching.

9. The process according to claim 8, **characterized in that** said anisotropic etching uses KOH and said isotropic etching uses a wet mixture containing HF, NNO₃ and H₂O.

10. The process according to any one of claims 1-9, **characterized in that** said barrier layer has a thickness in the range 1 000 angstroms to 10 000 angströms, preferably 2 000 angströms.

11. The process according to any one of claims 4-10, **characterized in that** said first stack of additional layers (7a, 8a) comprises an oxide layer with a thickness in the range 1 000 angströms to 10 000 angströms, preferably 5 000 angströms, and **in that** said other additional layer (8a) has a thickness in the range 1 000 angströms to 10 000 angströms, preferably 2 000 angströms.

12. The process according to any one of claims 2-11, **characterized in that** said tip forming material is diamond and **in that** a diamond nucleation layer is formed in the cavity of said negative mold (12) before said diamond layer (14, 14a) is deposited.

13. The process according to any one of claims 1-12, **characterized in that** said layer made of tip forming material (14, 15a) is formed to a thickness in the range 100 nm to 5 µm, preferably a thickness of 1 µm.

14. The process according to any one of claims 2-13, **characterized in that** said tip forming material is diamond and **in that** said diamond layer (14, 14a) is doped to render it conductive.
